**Europäisches Patentamt**

**European Patent Office**

**Office européen des brevets**

(19)

(11) Veröffentlichungsnummer: **0 156 931**

**B1**

(12) **EUROPÄISCHE PATENTSCHRIFT**

(45) Veröffentlichungstag der Patentschrift:
23.09.87

(21) Anmeldenummer: **84103601.5**

(22) Anmeldetag: **31.03.84**

(51) Int. Cl.⁴: **G 01 L 1/10,** G 01 G 21/14

(54) **Massen- und Kraftmessgerät.**

(43) Veröffentlichungstag der Anmeldung:
**09.10.85 Patentblatt 85/41**

(45) Bekanntmachung des Hinweises auf die Patenterteilung:
**23.09.87 Patentblatt 87/39**

(84) Benannte Vertragsstaaten:
**AT BE CH DE FR GB IT LI NL SE**

(56) Entgegenhaltungen:
**DE-A-2 857 525**
**DE-B-2 239 997**
**US-A-3 423 999**

(73) Patentinhaber: **K-TRON Patent AG, Limmatquai 3, CH- 8001 Zürich (CH)**

(72) Erfinder: **Wirth, Johannes, Sonnenbergstrasse 55, CH- 8032 Zürich (CH)**
Erfinder: **Gallo, Mario, Dr., Krönleinstrasse 1, CH- 8044 Zürich (CH)**

(74) Vertreter: **Eder, Carl E., Patentanwaltsbüro EDER AG Münchensteinerstrasse 2, CH- 4052 Basel (CH)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung bezieht sich auf ein Massen- und Kraftmessgerät mit einem Gestell, einem parallel geführten Lastträger, einem weglosen Messystem und einem Hebelwerk zur Übertragung der auf den Lastträger wirkenden Last auf das Messystem.

Solche Geräte, auch gefesselte Waagen genannt, sind z. B. aus dem US Patent 3 423 999 bekannt. Wird bei solchen Geräten das Messystem entfernt, so bilden sie ein kinematisches System mit einem einzigen Freiheitsgrad. Unter einem weglosen Messystem versteht man ein solches, bei welchem die vom Messystem zugelassene Bewegung virtuell ist. Solche Messysteme bestehen beispielsweise aus mindestens einer schwingenden Saite oder einem Dehnungsmeßstreifen und dazu passender Elektronik.

Das Hebelwerk dient zur Übertragung der Last auf das Messystem, wobei die Last meistens über- oder untersetzt auf das Messystem einwirkt. Die klassischen Schneiden und Pfannen des Hebelwerkes, die grosse Drehbewegungen zulassen, sind bei gefesselten Waagen meistens durch andere Elemente wie Kreuz- und Bandgelenke oder elastische Gelenke ersetzt. Diese bestehen aus zusammengesetzten Teilen, deren Rückstellkraft schwer kontrollierbar ist.

Auch kann das Übersetzungsverhältnis nicht beliebig klein gewählt werden sodass die absolute Länge des kleineren Hebelarmes nicht beliebig verkleinert werden kann.

Die der Erfindung zu Grunde liegende Aufgabe besteht darin, ein Massen- und Kraftmessgerät zu schaffen, bei welchem das Hebelwerk die zu messende Last mit höchster Genauigkeit und beliebigem Über- oder Untersetzungsverhältnis auf das Messystem überträgt, ohne dass dabei ein ungebührlicher wirtschaftlicher Aufwand entsteht.

Dies wird erfindungsgemäss dadurch erzielt, dass das Hebelwerk mindestens teilweise aus einer einzigen flachen Platte besteht, die einen mit dem Gestell fest verbundenen Teil aufweist.

In den beiliegenden Zeichnungen sind Ausführungsbeispiele des Erfindungsgegenstandes dargestellt.

Es zeigen:

Fig. 1 eine erste Ausführung,
Fig. 2 das Hebelwerk zu Fig. 1,
Fig. 3 einen Schnitt nach der Linie III-III in Fig. 2,
Fig. 4 ein Bandgelenk in schaubildlicher Ansicht,
Fig. 5 eine Variante zu Fig. 2,
Fig. 6 eine andere Variante zu Fig. 2,
Fig. 7 einen Schnitt nach der Linie VII-VII in Fig. 6,
Fig. 8 einen Schnitt nach der Linie VIII-VIII in Fig. 6,
Fig. 9 einen Schnitt nach der Linie IX-IX in Fig. 6,
Fig. 10 eine Variante zu Fig. 6,
Fig. 11 einen Schnitt nach der Linie XI-XI in Fig. 10,
Fig. 12 eine weitere Variante zu Fig. 2,
Fig. 13 eine zweite Ausführung,
Fig. 14 einen Teil des Hebelwerkes zu Fig. 13 in schaubildlicher Ansicht,
Fig. 15 ein Detail zu Fig. 14,
Fig. 16 eine dritte Ausführung,
Fig. 17 das Hebelwerk zu Fig. 15,
Fig. 18 ein Detail in schaubildlicher Ansicht, und
Fig. 19 ein anderes Detail in schaubildlicher Ansicht.

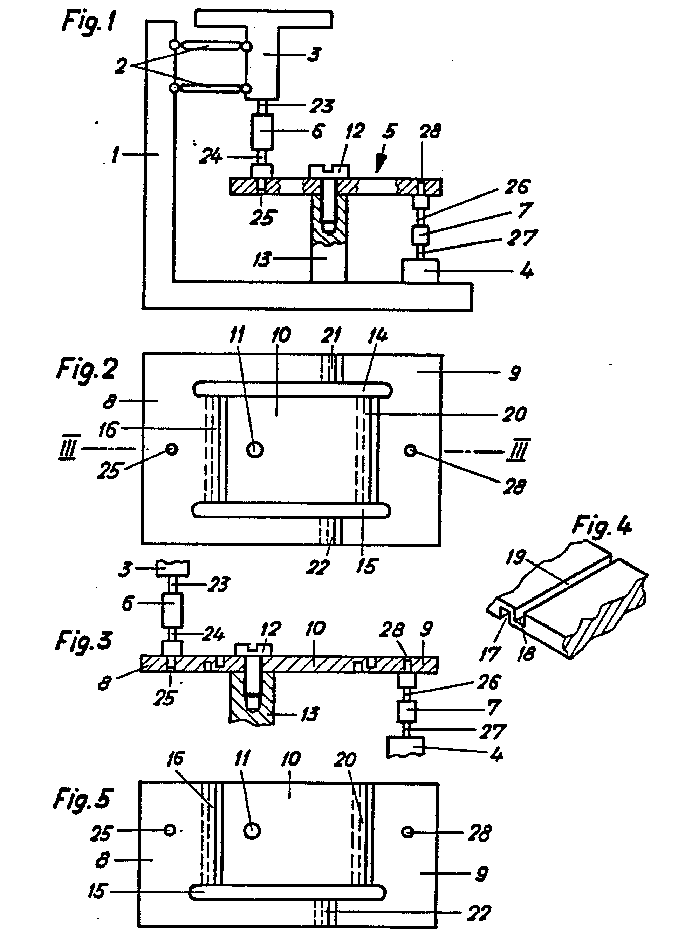

Fig. 1-4 zeigen schematisch eine erste Ausführung. Das Gerät besteht aus einem Gestell 1, einem mittels Lenker 2 parallel geführten Lastträger 3, einem im Gestell 1 befestigten Messystem 4, z. B. eine Kraftmessdose mit schwingenden Saiten, und einem Hebelwerk 5. Die zu messende Last wird über eine Stelze 6 vom Lastträger 3 auf das Hebelwerk 5 und von diesem über eine Stelze 7 auf das Messystem 4 übertragen. Das Hebelwerk 5 besteht aus einer starren Platte, z. B. aus Aluminium, die zwei Hebel 8, 9 und einen Teil 10 aufweist. Letzterer ist durch zwei Schlitze 14, 15 seitlich begrenzt. Teil 10 ist mit einer Bohrung 11 versehen und mittels einer Schraube 12 an einem Träger 13 des Gestelles 1 fest verbunden. Der erste Hebel 8 ist über Bandgelenke 16 am Teil 10 schwenkbar verbunden. Fig. 4 zeigt schaubildlich wie das Bandgelenk 16 ausgebildet ist. Es besteht aus einer auf der Unterseite der Platte gefräster Nut 17 und einer an der Oberseite der Platte gefräster Nut 18. Diese parallelen Nuten 17, 18 sind derart versetzt angeordnet, dass zwischen ihnen ein biegsames Band 19 entsteht. Der zweite Hebel 9 ist mittels eines Bandgelenkes 20 am Teil 10 schwenkbar verbunden, das zum Bandgelenk 16 parallel ist. Weiter sind diese beiden Hebel 8, 9 mittels eines Bandgelenkpaares 21, 22 aneinander verbunden.

Die Stelze 6, die mit zwei biegsamen Verjüngungen 23, 24 versehen ist, ist einerseits im Lastträger 3 und andererseits in einer Bohrung 25 des Hebels 8 eingespannt. Die Stelze 7 weist ebenfalls zwei biegsame Verjüngungen 26, 27 auf. Sie ist einerseits in einer Bohrung 28 des Hebels 9 eingespannt und wirkt andererseits auf den Krafteingang des Messystems 4. Die Ein- und Ausgangskräfte sind senkrecht gerichtet, da sie durch die Verjüngungspaare 23, 24 bzw. 26, 27 durchgehen müssen. Somit sind die auf die Bandgelenke 16, 20 und 21, 22 wirkenden Kräfte ebenfalls senkrecht.

Fig. 5 ist eine Variante der Fig. 2, bei welcher nur ein Schlitz 15 vorgesehen ist. Die Bandgelenke 16 und 20 erstrecken sich bis zum oberen (wie in Fig. 5 gesehen) Rand der Platte. Die Hebel 8 und 9 sind nur durch das Bandgelenk 22 verbunden.

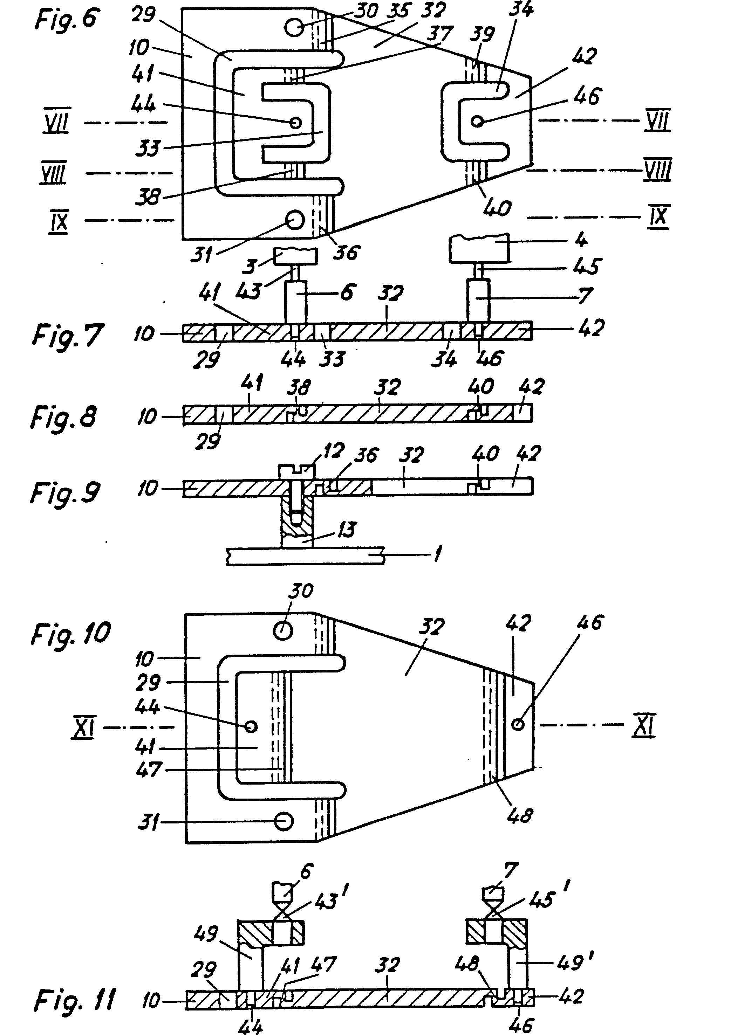

Fig. 6-9 zeigen eine Variante der Ausführung des Hebelwerkes 5, in welcher es aus einem einzigen Hebel besteht. Der gestellbezogene Teil 10 der Platte ist durch einen C-förmigen Schlitz 29 begrenzt. Er weist zwei runde Bohrungen 30, 31 auf, die zu ihrer Befestigung am Träger 13 mittels zweier Schrauben 12 dienen. Der einzige Hebel 32 weist ebenfalls zwei C-förmige, kleinere Schlitze 33, 34 auf. Er ist mittels Bandgelenke 35, 36 schwenkbar am Teil 10 verbunden. Er ist ferner mit zwei Paaren von Bandgelenken 37, 38 und 39, 40 versehen, sodass zwei Anschlußstücke 41, 42 gebildet werden, die am Hebel 32 schwenkbar verbunden sind. Die Stelze 6 weist in dieser Ausführung nur eine koaxiale Verjüngung 43 auf, ihr unteres Ende ist in einer Bohrung 44 des Anschlußstückes 41 eingespannt. Die Bohrung 44 und das Bandgelenkpaar 37, 38 sind so angeordnet, dass die achse des Bandgelenkpaares und diejenige der Stelze 6 sich kreuzen und zueinander senkrecht sind. Die Stelze 7 ist ebenfalls mit einer einzigen koaxialen Verjüngung 45 versehen. Ihr unteres Ende ist in einer Bohrung 46 des Anschlußstückes 42 eingespannt. Die Achse des Bandgelenkpaares 39, 40 und diejenige der Stelze 7 kreuten sich und sind zueinander senkrecht. In dieser Ausführung ist das Messystem oberhalb des Hebelwerkes 5 am Gestell 1 befestigt.

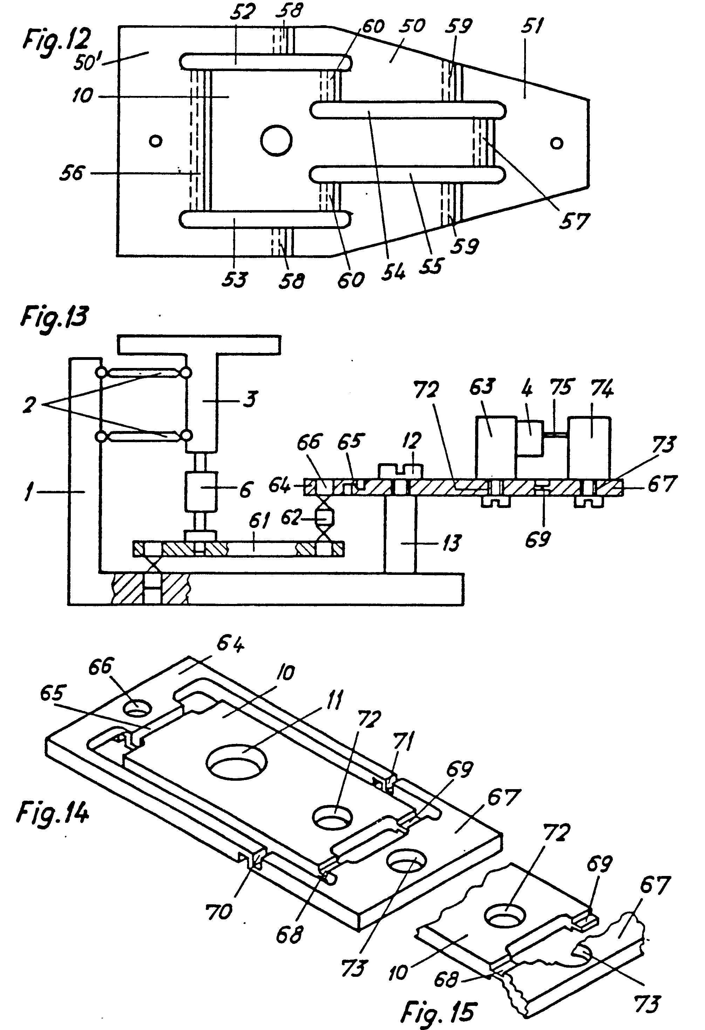

Fig. 10, 11 zeigen eine Variante der Fig. 6. An Stelle der Bandgelenkpaare 37, 38 und 39, 40 sind zwei einzelne Bandgelenke 47 bzw. 48 vorgesehen, und die Anschlußstücke 41 bzw. 42 mit dem Hebel 32 schwenkbar zu verbinden. Die Bohrungen 44, 46 liegen nicht mehr auf der Achse dieser Bandgelenkpaare, wie das in Fig. 5 der Fall ist. Dadurch geht die Möglichkeit drehsymmetrischer Ein- und Ausgangsstelzen verloren. Die Stelzen 6 und 7 müssen in diesem Fall mit einem L-förmigen Fuss 49 bzw. 49' versehen werden, der in der Bohrung 44 bzw. 46 eingespannt ist, das Ganze derart, dass die Verjüngungen 43 bzw. 45 durch senkrecht oberhalb der Bandgelenke 47 bzw. 48 liegende Kreuzgelenke 43' und 45' ersetzt sind. Dadurch wird die Übertragung senkrechter Kräfte wieder gewährleistet.

Fig. 12 zeigt eine weitere Variante, bei welcher das Hebelwerk aus drei Hebeln 50', 50 und 51 besteht, die vom Teil 10 durch zwei Paare von Längsbohrungen 52, 53 und 54, 55 getrennt sind. Hebel 50' und Hebel 51 sind mittels Bandgelenke 56 bzw. 57 am Teil 10 schwenkbar befestigt. Der mittlere Hebel 50 ist mittels eines Bandgelenkpaares 60 mit dem Teil 10 und mittels Bandgelenkpaare 58 bzw. 59 mit dem Hebel 50' bzw. mit dem Hebel 51, schwenkbar verbunden.

In Fig. 13-15 ist eine Ausführung des Messgerätes schematisch dargestellt, bei welcher nur ein Teil des Hebelwerkes 5 aus einer Platte besteht. Die Stelze 6 wirkt zunächst auf einen im Gestell schwenkbar gelagerten Hebel 61, der über ein Zugelement 62 mit den übrigen Hebeln wirkt, die mit dem Teil 10 eine Platte bilden. Ferner ist in dieser Ausführung das Messystem 4 an einem Halter 63 des gestellbezogenen Teiles 10 der Platte befestigt. Letztere ist in Fig. 14 schaubildlich dargestellt. Der erste Hebel 64 ist mittels eines Bandgelenkes 65 am Teil 10 schwenkbar verbunden. Er weist eine Bohrung 66 zur Aufnahme des, nicht dargestellten Anschlußstückes des Zugelementes 62 auf. Der zweite Hebel 67 ist mittels eines horizontalen, biegsamen Gelenkpaares 68, 69 (Fig. 14) ebenfalls am Teil 10 schwenkbar verbunden. Die beiden Hebel 64, 67 sind mittels eines Bandgelenkpaares 70, 71 verbunden. Der Teil 10 ist mit einer zweiten Bohrung 72 zur Aufnahme und Befestigung des Halters 63 des Messystems 4 versehen. Der Hebel 67 weist eine Bohrung 73 auf, in welcher ein zweiter Halter 74 befestigt ist. Die Belastung wird über die Stelze 6, den Hebel 61, das Zugelement 62, den Hebel 64 und das Bandgelenkpaar 70, 71 auf den Hebel 67 übertragen. Der Halter 74, der mittels eines Zugbandes 75 mit dem Messystem 4 verbunden ist, überträgt sie auf das Messystem. Es versteht sich, dass die auf das Messystem 4 übertragene Messkraft in einem bestimmten, von den verschiedenen Hebelarmlängen abhängenden Verhältnis zur Last steht.

In dieser Ausführung könnte das Messystem 4 als Ganzes aus den in Fig. 13 mit Bezugsnummern 63 und 74 bezeichneten Elementen bestehen.

In diesem Fall würde das mit Bezugsnummer bezeichnete Element 75 einen Teil des Messystems, z. B. eine schwingende Saite oder einen Dehnungsmeßstreifen, schematisch darstellen.

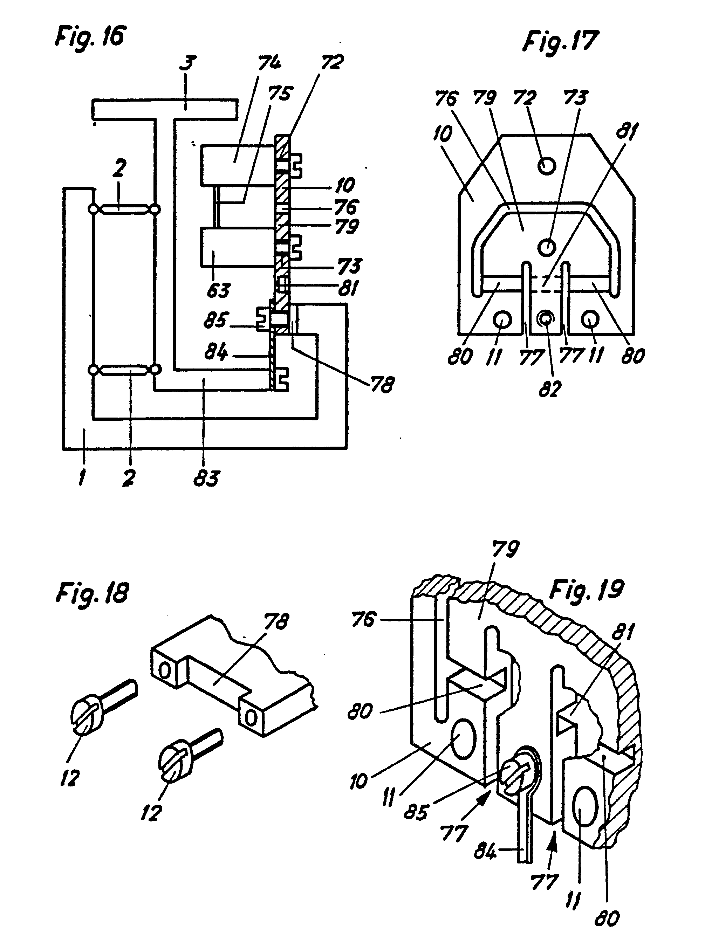

Eine dritte Ausführung des Gerätes ist in Fig. 16-19 dargestellt, bei welcher die das Hebelwerk bildende Platte senkrecht angeordnet ist. Der mit dem Gestell 1 verbundene Teil 10 der Platte ist durch einen C-förmigen Schlitz 76 und zwei längliche Schlitze 77 begrenzt. Er weist zwei Bohrungen 11 auf, über welche er mittels Schrauben 12 an einem C-förmigen Ausleger 78 des Gestelles 1 befestigt ist. Der einzige Hebel 79 ist über zwei, wie in Fig. 19 gesehen, vordere Fräsungen 80 am Teil 10 schwenkbar gelagert. Eine hintere Fräsung 81 zwischen den Schlitzen 77 dient zur Bildung eines Anschlussteiles zur Aufnahme der Eingangskraft. Dieser Teil weist eine Bohrung 82 auf. Der Lastträger 3 ist mit einem horizontalen Arm 83 versehen, der über ein Zugband 84 mit dem Anschlussteil verbunden ist. Eine Schraube 85 dient zur Befestigung des oberen Endes des Zugbandes 84. Somit wirkt die Last unmittelbar auf den Hebel 79. Die senkrecht auf den Anschlussteil wirkende Zugkraft wird vom Hebel 79 auf das Element 75 untersetzt übertragen.

Die dargestellten Bandgelenke, z. B. das Bandgelenk 65 und das Bandgelenkpaar 69, können statt senkrecht bzw. horizontal schräg angeordnet werden. Dank Kombination von horizontalen und vertikalen Bandgelenken längs einer Schwenkachse können auch Kreuzgelenke gebildet werden.

## Patentansprüche

1. Massen-und Kraftmessgerät mit einem Gestell (1), einem parallel geführten Lastträger (3), einem weglosen Messsystem (4) und einem Hebelwerk (5) zur Übertragung der auf den Lastträger (3) wirkenden Last auf das Messsystem (4), dadurch gekennzeichnet, dass das Hebelwerk (5) mindestens teilweise aus einer einzigen, flachen Platte besteht, die einen mit dem Gestell (1) fest verbundenen Teil (10) aufweist.

2. Massen- und Kraftmessgerät nach Anspruch 1, dadurch gekennzeichnet, dass das ganze Hebelwerk aus einer einzigen Platte besteht, die zwei Hebel (8, 9) aufweist, die mit dem mit dem Gestell (1) verbundenen Teil (10) und untereinander mittels Bandgelenken (16, 20 bzw. 21, 22) verbunden sind.

3. Massen- und Kraftmessgerät nach Anspruch 2, dadurch gekennzeichnet, dass der Lastträger (3) über eine Stelze (6) mit zwei Verjüngungen (23, 24) mit dem Eingangshebel (8) des Hebelwerkes (5) verbunden ist und dass der Ausgangshebel (9) des Hebelwerkes (5) über eine Stelze (7) mit zwei Verjüngungen (26, 27) auf das Messsystem (4) einwirkt.

4. Massen- und Kraftmessgerät nach Anspruch 1, dadurch gekennzeichnet, dass das ganze Hebelwerk aus dem mit dem Gestell (1) verbundenen Teil (10) und einem einzigen Hebel (32) besteht, welcher Hebel (32) mittels Bandgelenken (35, 36) mit diesem Teil (10) verbunden sonst durch einen Schlitz (29) von ihm getrennt ist, dass dieser Hebel (32) zwei Schlitze (33, 34) zur Bildung eines Eingangs- und eines Ausgangsteiles (41, 42) aufweist, welche Eingangs- und Ausgangsteile (41, 42) mittels Bandgelenken (37, 38 bzw. 39, 40) mit dem Hebel (32) verbunden sind.

5. Massen- und Kraftmessgerät nach Anspruch 4, dadurch gekennzeichnet, dass der Lastträger (3) über eine Stelze (6) mit einer Verjüngung (43) auf den Eingangsteil (41) einwirkt und dass der Ausgangsteil (42) über eine Stelze (7) mit einer Verjüngung (45) auf das Messsystem (4) einwirkt, wobei die Wirkungsgeraden dieser Stelzen (6, 7) jeweils zur gemeinsamen Achse der Bandgelenkpaare (37, 38 bzw. 39, 40), die diese Eingangs- und Ausgangsteile (41, 42) mit dem Hebel (32) verbinden, senkrecht stehen.

6. Massen- und Kraftmessgerät nach Anspruch 1, dadurch gekennzeichnet, dass das ganze Hebelwerk (5) aus dem mit dem Gestell (1) verbundenen Teil (10) und drei Hebeln (50' 50, 51) besteht und dass diese Hebel (49, 50, 51) mit diesem Teil (10) mittels Bandgelenken (56 bzw. 60 bzw. 57) verbunden sind und dass der zweite Hebel (50) mit dem ersten (50') und dem dritten (51) ebenfalls mittels Bandgelenkpaaren (58 bzw. 59) verbunden ist.

7. Massen- und Kraftmessgerät nach Anspruch 1, dadurch gekennzeichnet, dass das Messsystem (4) am mit dem Gestell (1) verbundenen Teil (10) angebracht ist und dass der Ausgangshebel (61) des Hebelwerkes (5) über ein Zugelement (75) auf das Messsystem (4) einwirkt.

8. Massen- und Kraftmessgerät nach Anspruch 7, dadurch gekennzeichnet, dass das Hebelwerk (5) aus einem im Gestell (1) schwenkbar gelagerten Hebel (61) und zwei mit dem mit dem Gestell (1) verbundenen Teil (10) eine Platte bildenden Hebeln (64, 67) besteht, welche Hebel (64, 67) mit diesem Teil (10) und untereinander mittels Bandgelenken (65 bzw. 68, 69 und 70, 71) verbunden sind, wobei der Lastträger (3) auf den Hebel (61), dieser über ein Zugelement (62) auf den ersten Hebel (64), und der zweite Hebel (67) über ein Zugelement (75) auf das Messsystem (4) einwirkt.

9. Massen- und Kraftmessgerät nach Anspruch 1, dadurch gekennzeichnet, dass das ganze Hebelwerk (5) aus dem mit dem Gestell (1) verbundenen Teil (10) und einem einzigen Hebel (79) besteht, welch' letzterer über ein Zugband (84) unmittelbar mit dem Lastträger (3) verbunden ist.

## Claims

1. Mass and force measuring device with a frame (1), a parallelly guided load carrier (3), a travel-free measuring system (4) and a lever mechanism (5) for the transmission of the load acting on the load carrier (3) onto the measuring system (4), characterised thereby, that the lever mechanism (5) consists at least in part of a single flat plate which displays a part (10) firmly connected with the frame (1).

2. Mass and force measuring device according to claim 1, characterised thereby, that the entire lever mechanism consists of a single plate which displays two levers (8, 9), which are connected with the part (10) connected with the frame (1) and each with the other by means of band joints (16, 20 or 21, 22).

3. Mass and force measuring device according to claim 2, characterised thereby, that the load carrier (3) is connected with the input lever (8) of the lever mechanism (5) through a foot (6) with two constrictions (23, 24) and that the output lever (9) of the lever mechanism (5) acts through a foot (7) with two constrictions (26, 27) on the measuring system (4).

4. Mass and force measuring device according to claim 1, characterised thereby, that the entire lever mechanism consists of the part (10) connected with the frame (1) and a single lever (32), which lever (32) is connected by means of band joints (35, 36) with this part (10), but otherwise seperated from it by a slot (29), that this lever (32) displays two slots (35, 34) for the formation of an input part (41) and an output part (42), which input part (41) and output part (42) are connected by means of band joints (37, 38 or 39, 40) with the lever (32).

5. Mase and force measuring device according to claim 4, characterised thereby, that the load carrier (3) acts on the input part (41) through a foot (6) with a constriction (45) end that the output part (42) acts through a foot (7) with a constriction (45) on the measuring system (4), wherein the lines of action of these feet (6, 7) each stand perpendicularly to the common axis of the band joint pairs (37, 38 or 39, 40), which connect this input part (41) and output part (42) with the lever (32).

6. Mass and force measuring device according to claim 1, characterised thereby, that the entire lever mechanism (5) consists of the part (10) connected with the frame (1) and three levers (50', 50, 51) and that these levers (50', 50, 51) are connected by means of band joints (56 or 60 or 57) with this part (10) and that the second lever (50) is likewise connected by means of band joint pairs (55 or 59) with the first lever (50') and the third lever (51).

7. Mass and force measuring device according to claim 1, characterised thereby, that the measuring system (4) is mounted at the part (10) connected with the frame (1) and that the output lever (61) of the lever mechanism (5) acts through a pull element (75) on the measuring system (4).

8. Mass and force measuring device according to claim 7, characterised thereby, that the lever mechanism (5) consists of a lever (61) pivotably borne in the frame (1) and of two levers (64, 67), which form a plate with the part (10) connected with the freme (1) and are connected with this part (10) and each with the other by means of band joints (65 or 68, 69 and 70, 71), wherein the load carrier (3) acts on the lever (61), this through a pull element (62) on the first lever (64) and the second lever (67) through a pull element (75) on the measuring system (4).

9. Mass and force measuring device according to claim 1, characterised thereby, that the entire lever mechenism (5) consists of the part (10) connected with the frame (1) and s single lever (79) which letter is connected through a pull band (84) directly with the load carrier (5).

## Revendications

1. Appareil de mesure de masse et de force comportant un bâti (1), une poutre porte-charge (3) guidée parallèlement à elle-même, un système de mesure sans course (4) et un mécanisme à leviers (5) destiné à transmettre, au système de mesure (4), la charge agissant sur la poutre porte-charge (3), caractérisé en ce que le mécanisme à leviers (5) est constitué, au moins partiellement, par une plaque plane unique qui présente une partie (10) fermement solidarisée au bâti (1).

2. Appareil de mesure de masse et de force selon la revendication 1, caractérisé en ce que le mécanisme à leviers est, dans sa totalité, constitué par une plaque unique qui présente deux leviers (8, 9) lesquels sont reliés à la partie (10) solidarisée au bâti (1) ainsi qu'entre eux, au moyen d'articulations à bande (16, 20, resp. 21, 22).

3. Appareil de mesure de masse et de force selon la revendication 2, caractérisé en ce que la poutre porte-charge (3) est reliée, par l'intermédiaire d'une jambe (6) présentant deux parties amincies (23, 24), au levier d'entrée (8) du mécanisme à levier (5) et en ce que le levier de sortie (9) du mécanisme à leviers (5) agit sur le système de mesure (4), par l'intermédiaire d'une jambe (7) présentant deux parties amincies (26, 27).

4. Appareil de mesure de masse et de force selon la revendication 1, caractérisé en ce que le mécanisme à leviers se compose dans sa totalité de la partie (10) solidarisée au bâti (1) et d'un levier unique (32), ce levier (32) étant relié à ladite partie (10) par des articulations à bande et par ailleurs séparé de cette dernière par une fente (29), en ce que ce levier (32) présente deux fentes (33, 34) définissant une partie d'entrée et une partie de sortie (41, 42), ces parties d'entrée et de sortie (41, 42) étant reliées au levier (32) par des articulations à bande (37, 38 resp. 39, 40).

5. Appareil de mesure de masse et de force selon la revendication 4, caractérisé en ce que la poutre porte-charge (3) agit sur la partie d'entrée (41), par l'intermédiaire d'une jambe (6) présentant une partie amincie (43), et en ce que la partie de sortie (42) agit sur le système de mesure (4), par l'intermédiaire d'une jambe (7) présentant une partie amincie (45), les lignes d'action de ces jambes (6, 7) s'étendant perpendiculairement à l'axe commun des paires d'articulations à bande respectives (37, 38 resp. 39, 40) qui relient ces parties d'entrée et de sortie (41, 42) au levier (32).

6. Appareil de mesure de masse et de force selon la revendication 1, caractérisé en ce que le mécanisme à leviers (5) est constitué dans sa totalité par la partie (10) solidarisée au bâti (1) et par trois leviers (50', 50, 51) et en ce que ces leviers (49, 50, 51) sont reliés à ladite partie (10) par des articulations à bande (56 resp. 60 resp. 57) et en ce que le deuxième levier (50) est relié au premier (50') et au troisième (51) également par des paires d'articulations à bande (58 resp. 59).

7. Appareil de mesure de masse et de force selon la revendication 1, caractérisé en ce que le système de mesure (4) est monté sur la partie (10) solidarisée au bâti (1) et en ce que le levier de sortie (61) du mécanisme à leviers (5) agit, par l'intermédiaire d'un élément de traction (75), sur le système de mesure (4).

8. Appareil de mesure de masse et de force selon la revendication 7, caractérisé en ce que le mécanisme à leviers (5) se compose d'un levier (61) monté pivotant sur le bâti (1) et de deux leviers (64, 67) qui, avec la partie (10) solidarisée au bâti (1), forment une plaque, ces derniers leviers (64, 67) étant reliés à ladite partie (10) ainsi qu'entre eux par des articulations à bande (65 resp. 68, 69 et 70, 71), auquel cas la poutre porte-charge (3) agit sur le levier (61), ce dernier agit sur le premier levier (64) par l'intermédiaire d'un élément de traction (62) et le deuxième levier (67) agit sur le système de mesure (4) par l'intermédiaire d'un élément de traction (75).

9. Appareil de mesure de masse et de force selon la revendication 1, caractérisé en ce que le mécanisme à leviers (5) se compose dans sa totalité de la partie (10) solidarisée au bâti (1) et d'un levier unique (79), ce dernier étant relié directement à la poutre porte-charge (3) par l'intermédiaire d'une bande de traction (84).

Fig. 1

Fig. 2

Fig. 3

Fig. 4

Fig. 5

Fig. 6

Fig. 7

Fig. 8

Fig. 9

Fig. 10

Fig. 11

Fig. 12

Fig. 13

Fig. 14

Fig. 15

**Fig. 16**

**Fig. 17**

**Fig. 18**

**Fig. 19**